# EUROPEAN PATENT APPLICATION

(11) **EP 4 742 424 A1**
(43) Date of publication of application: **13.05.2026**
(21) Application number: 24871084.0
(22) Date of filing: 30.09.2024
(51) Int. Cl.: H01M 50/533

(54) **ELECTRODE PLATE, CELL AND BATTERY MODULE**

(30) Priority: 30.04.2024 CN 202420954961 U
(71) Applicant: Eve Power Co., Ltd., Jingmen, Hubei 448000 (CN)
(72) Inventor: YANG, Xin, Jingmen, Hubei 448000 (CN); CHEN, Liquan, Jingmen, Hubei 448000 (CN); SU, Bin, Jingmen, Hubei 448000 (CN)
(74) Representative: Tiburzi, Andrea
(86) International application number: PCT/CN2024/122799
(87) International publication number: WO 2025/067549

(57) **Abstract**

An electrode plate, a cell and a battery module are provided. The electrode plate includes an electrode plate body (1) and N tabs (2). The electrode plate body (1) has a length direction and a width direction perpendicular to each other. The N tabs (2) are arranged at intervals in the length direction of the electrode plate body (1), the bottom edge widths of the N tabs (2) gradually decrease and then increase in the length direction of the electrode plate body (1), and the N tabs (2) overlap after the electrode plate body (1) is wound. N is a positive integer greater than or equal to 3.

## Description

This application claims priority to Chinese Patent Application No. 202420954961.5 filed with the China National Intellectual Property Administration (CNIPA) on April 30, 2024, the disclosure of which is incorporated herein by reference in its entirety.

### TECHNICAL FIELD

This application relates to the field of battery technology, specifically, to an electrode plate, a cell and a battery module.

### BACKGROUND

Winding electrode plates to manufacture a battery is advantageous for increasing production speed and reducing production costs. To increase battery energy density, multi-tab electrode plates are often used for winding. In the process of winding multi-tab electrode plates, errors in dimensional accuracy of winding needle processing and thickness errors in the incoming electrode plate material may cause tab misalignment in a wound state. Severe misalignment may adversely affect subsequent ultrasonic soldering of the tabs to the adapters and cell assembly, increase defects during production, and compromise product performance.

In a multi-tab wound cell disclosed in related art, the multiple tabs gradually decrease in width from the winding initial end to the winding tail end. After being wound, the tabs with progressively reduced widths can prevent adverse impact on the tab misalignment and improve alignment of the multiple tabs.

### Technical Problem

However, the above solution has the following drawbacks: due to the gradually decreasing tab widths, when there are a large number of tabs, one or more tabs at the winding tail end may be too narrow. After the electrode plate is wound, the overlapping tabs must be ultrasonically soldered. The ultrasonic solder marks formed on the tabs must meet certain dimensional requirements to ensure solder stability and current carrying capacity at the tab locations. In the above solution, the width of the tab at the winding tail end may be less than the designed solder mark length, resulting in poor soldering and seriously affecting battery performance.

Therefore, an electrode plate, a cell and a battery module that can avoid this problem are in urgent demand.

### Technical Solution

In a first aspect, an electrode plate is provided according to the present application, which includes an electrode plate body and N tabs.

The electrode plate body has a length direction and a width direction which are perpendicular to each other.

The N tabs are arranged at intervals in the length direction of the electrode plate body, bottom edge widths of the N tabs decrease and then increase sequentially in the length direction of the electrode plate body, and the N tabs overlap after the electrode plate body is wound.

N is a positive integer greater than or equal to 3.

For example, the N tabs include a middle tab and two end tabs located at two ends respectively.

In response to N being an odd number, an ((N+1)/2)^{th} tab is the middle tab.

In response to N being an even number, an (N/2)^{th} tab and an ((N/2)+1)^{th} tab are middle tabs.

Among the N tabs, a bottom edge width of the middle tab is the smallest, and bottom edge widths of the two end tabs are the same.

For example, the bottom edge width of each end tab is a, and the bottom edge width of the middle tab is b, where b < a.

In response to N being the odd number, the bottom edge width difference Δw between two adjacent tabs is equal to 2(a - b)/(N - 1).

In response to N being an even number, the bottom edge width difference Δw between the two middle tabs is equal to 0, and the bottom edge width difference Δw between non-middle tabs and the bottom edge width difference Δw between a non-middle tab and the middle tab are each equal to 2(a - b)/(N - 2). The non-middle tab is a tab other than the middle tabs.

For example, the bottom edge width a of each end tab and the bottom edge width b of the middle tab satisfy: b ≥ a/2.

For example, the bottom edge width difference Δw between two adjacent tabs is in the range of 0 mm to 4 mm.

For example, each of the N tabs is provided with an ultrasonic solder mark, the N tabs are fixedly connected at the ultrasonic solder marks, the dimension of the ultrasonic solder mark in the length direction of the electrode plate body is L, and the bottom edge width of the tab with the smallest bottom edge width is 0.8 mm to 2 mm larger than L.

For example, heights of the N tabs are uniform.

Alternatively, the heights of the N tabs gradually increase in the length direction of the electrode plate body.

For example, the center-to-center distances between two adjacent tabs gradually increase in the length direction of the electrode plate body.

For example, the tab is trapezoidal, and a lower bottom edge of the tab is connected to the electrode plate body, and the bottom edge width is the width of the lower bottom edge of the tab.

In a second aspect, the present application provides a cell including a housing and a jelly roll component disposed within the housing. The jelly roll component includes a first separator, a positive electrode plate, a second separator, and a negative electrode plate stacked in sequence. The positive electrode plate and the negative electrode plate are each the above-described electrode plate.

In a third aspect, the present application provides a battery module including a cells contact system (CCS) assembly and multiple above-described cells. The CCS assembly is configured to collect voltage signals and temperature signals of the cells.

### Beneficial Effects

The electrode plate, the cell, and the battery module are provided according to this application. One end of the electrode plate body is fixed while the other end is wound to form a jelly roll. After winding, the N tabs overlap. The bottom edge widths of the N tabs decrease and then increase sequentially in the length direction of the electrode plate body. Among the N overlapping tabs, since adjacent tabs have different bottom edge widths, the tab with a smaller bottom edge width will fall within the area of the tab with a larger bottom edge width. Even if there is slight misalignment, the two side edges of the tab with a smaller bottom edge width generally do not extend beyond the two side edges of the tab with a larger bottom edge width. The design with width difference between adjacent tabs can offset misalignment caused by winding needle dimensional accuracy and electrode plate thickness accuracy. Furthermore, since the bottom edge widths of the N tabs decrease and then increase sequentially in the length direction of the electrode plate body, rather than in a trend of decreasing sequentially, the bottom edge width of the tab with the smallest bottom edge width is not excessively narrow, ensuring that the width of the tab meets ultrasonic soldering requirements, and ensuring solder strength and current carrying capacity of the N tabs, and improving battery yield.

### BRIEF DESCRIPTION OF THE DRAWINGS

FIG. 1 is a schematic structural diagram of a first electrode plate according to a possible embodiment of the present application;
FIG. 2 is a schematic structural diagram of a second electrode plate according to a possible embodiment of the present application;
FIG. 3 is a schematic diagram of an electrode plate wound into a jelly roll component according to a possible embodiment of the present application;
FIG. 4 is a schematic sectional view of multiple electrode tabs in a height direction after the first electrode plate is wound according to a possible embodiment of the present application;
FIG. 5 is a schematic sectional view of multiple electrode tabs in a height direction after the second electrode plate is wound according to a possible embodiment of the present application; and
FIG. 6 is a schematic structural diagram of a battery module according to a possible embodiment of the present application.

Reference list:
1 electrode plate body; 2 tab
100 jelly roll component
200 cell
300 CCS component

### DETAILED DESCRIPTION

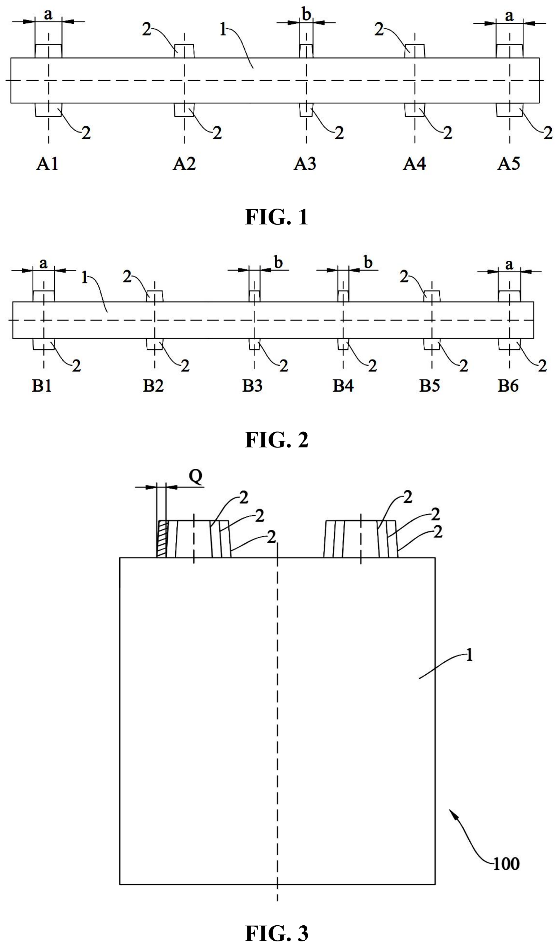

As shown in FIGS. 1 and 2, an electrode plate is provided according to this embodiment, which may be, for example, a multi-tab electrode plate, including an electrode plate body 1 and N electrode tabs 2. This electrode plate not only reduces misalignment between the tabs 2 after a multi-tab electrode plate is wound, but also ensures that the bottom edge widths of the tabs 2 meet ultrasonic soldering requirements, thereby improving battery yield.

The electrode plate body 1 has a length direction and a width direction that are perpendicular to each other. Specifically, in FIGS. 1 and 2, the left-right direction represents the length direction of the electrode plate body 1, and the up-down direction represents the width direction of the electrode plate body 1.

N tabs 2 are arranged at intervals in the length direction of the electrode plate body 1. Bottom edge widths of the N tabs 2 decrease and then increase in sequence in the length direction of the electrode plate body 1; and the N tabs 2 overlap after the electrode plate body 1 is wound. N is a positive integer greater than or equal to 3, such as 5, 6, 7, 8, and is selected based on battery design requirements.

In winding the electrode plate, one end of the electrode plate body 1 is fixed while the other end is wound to form a jelly roll. After winding, the N tabs 2 overlap, as shown in FIGS. 3, 4, and 5. The N overlapping tabs 2 are ultrasonically soldered together and then electrically connected to the electrode terminal on a cell cover plate via an adapter. In this embodiment, the bottom edge widths of the N tabs 2 decrease and then increase in the length direction of the electrode plate body 1. Among the N overlapping tabs 2, since adjacent tabs 2 have different bottom edge widths, the tab 2 with a smaller bottom edge width will fall within the area of the tab 2 with a larger bottom edge width. Even if there is slight misalignment, the two side edges of the tab 2 with a smaller bottom edge width generally do not extend beyond the two side edges of the tab 2 with a larger bottom edge width. The design with a width difference between adjacent tabs 2 can offset misalignment caused by winding needle dimensional accuracy and electrode plate thickness accuracy. Furthermore, since the bottom edge widths of the N tabs 2 decrease and then increase in the length direction of the electrode plate body 1, rather than in a trend of decreasing sequentially, the bottom edge width of the tab 2 with the smallest bottom edge width is not excessively narrow, ensuring that the width of the tab 2 meets ultrasonic soldering requirements, ensuring solder strength and current carrying capacity of the N tabs 2, and improving battery yield.

As shown in FIGS. 1 and 2, an original electrode plate is cut by a cutting device to form multiple tabs 2. Furthermore, each of the two sides of the electrode plate body 1 in the width direction has N tabs 2, and the N tabs 2 on each side are arranged facing the N tabs 2 on the other side respectively. Before winding, the electrode plates shown in FIGS. 1 and 2 are cut along the longitudinal centerline of each electrode plate to form two electrode plates, that is, upper and lower electrode plates, both of which can be used for winding. For example, the bottom edge widths of the two tabs 2 facing each other in the width direction are exactly the same, improving cutting efficiency.

The N tabs 2 include a middle tab and two end tabs at the two ends. After the electrode plate body 1 is wound, the two end tabs are located on the outermost sides.

If N is an odd number, the ((N+1)/2)^{th} tab 2 is the middle tab, that is, the tab 2 in the middle is the middle tab. For example, referring to FIG. 1, if N is 5, the third tab 2 is the middle tab, that is, the tab 2 at position A3 is the middle tab, and the number of tabs 2 on one side of the middle tab is the same as the number of tabs 2 on the other side. If N is 7, the fourth tab 2 is the middle tab, and so on. These are not listed here.

If N is an even number, the (N/2)^{th} tab 2 and the ((N/2)+1)^{th} tab 2 are middle tabs, that is, the two tabs 2 in the middle are middle tabs. For example, referring to FIG. 2, if N is 6, the third and fourth tabs 2 are middle tabs, that is, the tabs 2 at positions B3 and B4 are middle tabs, and the number of tabs 2 on each of the two sides of these two middle tabs is the same. If N is 8, the fourth and fifth tabs 2 are middle tabs, and so on. These are not listed here.

Among the N tabs 2 in this embodiment, the middle tab has the smallest bottom edge width. Specifically, in FIG. 1, the bottom edge width of the middle tab at position A3 is the smallest. Of the tabs 2 on two sides, the bottom edge width of the tab 2 at position A1 is larger than that at position A2, and the bottom edge width of the tab 2 at position A5 is larger than that at position A4. Specifically, in FIG. 2, the bottom edge widths of the middle tabs at positions B3 and B4 are the smallest. Of the tabs 2 on two sides, the bottom edge width of the tab 2 at position B1 is larger than that at position B2, and the bottom edge width of the tab 2 at position B6 is larger than that at position B5. Since the bottom edge width of the middle tab is the smallest, the bottom edge widths of the tabs 2 on the two sides increase from the center to the ends. This compensates for misalignments of the tabs 2 while ensuring the bottom edge width of the narrowest tab 2 to the maximum extent, preventing the bottom edge width of the narrowest tab 2 from being too narrow to adversely affect subsequent ultrasonic soldering.

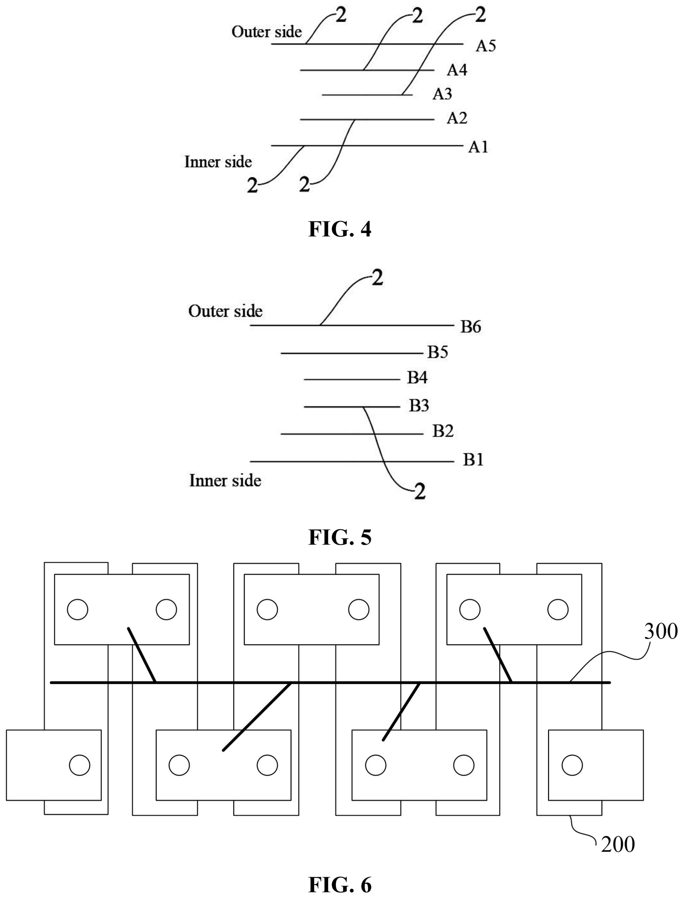

A schematic diagram illustrating the overlapping of the five tabs 2 in FIG. 1 after the electrode plate body 1 is wound is as shown in FIG. 4. A schematic diagram illustrating the overlapping of the six tabs 2 in FIG. 2 after the electrode plate body 1 is wound is as shown in FIG. 5. The two narrowest middle tabs are located in the middle of the six tabs 2. The schematic sectional views of the multiple tabs in the height direction after the electrode plate body 1 is wound, as shown in FIGS. 4 and 5, take it as an example that the left end of the electrode plate body 1 is fixed. Specifically, after winding, the tab A1 in FIG. 4 is located at the innermost side, and the tab A5 in FIG. 4 is located at the outermost side. The tab B1 in FIG. 5 is located at the innermost side, and the tab B6 in FIG. 5 is located at the outermost side.

For example, the bottom edge widths of the two end tabs are the same. That is, the bottom edge widths of the tabs 2 at positions A1 and A5 in FIG. 1 are the same, and the bottom edge widths of the tabs 2 at positions B1 and B6 in FIG. 2 are the same. As shown in FIGS. 4 and 5, the two end tabs are located at the innermost and outermost sides, and the edges of the remaining tabs 2 do not extend beyond the edges of the two end tabs, ensuring uniformity after the multiple tabs 2 are stacked.

For example, except for the two adjacent middle tabs, the bottom edge width difference between adjacent tabs 2 is consistent. For example, the bottom edge width of each end tab is a, and the bottom edge width of the middle tab is b, where b < a. If N is an odd number, the bottom edge width difference between adjacent tabs 2 is Δw = 2(a - b)/(N - 1).

Referring to FIG. 1, the bottom edge width of the tab 2 at position A3 is b, the bottom edge width of each of the tabs at positions A1 and A5 is a, and the bottom edge widths of the tabs at positions A2 and A4 are the same. N has a value of 5. The bottom edge width difference between two adjacent tabs 2 is Δw = (a - b)/2. The bottom edge width difference between the tabs 2 at positions A5 and A4 is equal to the bottom edge width difference between the tabs 2 at positions A4 and A3, and the bottom edge width difference between the tabs 2 at positions A1 and A2 is equal to the bottom edge width difference between the tabs 2 at positions A2 and A3.

If N is an even number, for the two middle tabs in the middle, the bottom edge width difference Δw = 0. Except for these two middle tabs, the remaining tabs are non-middle tabs, and the bottom edge width difference Δw between non-middle tabs, as well as the bottom edge width difference Δw between middle and non-middle tabs, is 2(a - b)/(N - 2).

Referring to FIG. 2, the bottom edge widths of the tabs 2 at positions B3 and B4 are b, the bottom edge widths of the tabs 2 at positions B1 and B6 are a, and the bottom edge widths of the tabs 2 at positions B2 and B5 are the same. N has a value of 6, and the bottom edge width difference Δw between two adjacent tabs 2 is 2(a - b)/(N - 2). The bottom edge width difference between the tabs 2 at positions B6 and B5 is equal to the bottom edge width difference between the tabs 2 at positions B5 and B4, and the bottom edge width difference between the tabs 2 at positions B1 and B2 is equal to the bottom edge width difference between the tabs 2 at positions B2 and B3. (a - b) is the total width difference between the widest and narrowest tabs 2. In this embodiment, this total width difference is evenly distributed between adjacent tabs 2, ensuring that each adjacent tab 2 has a misalignment-preventing effect.

For example, the bottom edge width a of the end tab and the bottom edge width b of the middle tab satisfy the following condition: b ≥ a/2. This dimensional design minimizes the total width difference between the widest and narrowest tabs 2, ensuring that the narrowest tab 2 is not too narrow and can reduce material consumption. For example, the bottom edge width b of the middle tab is equal to a/2; or the bottom edge width b of the middle tab is equal to a/3. For example, the bottom edge width a of the end tab is 6 mm, and the bottom edge width b of the middle tab is 3 mm.

For example, the bottom edge width difference Δw between two adjacent tabs 2 ranges from 0 mm to 4 mm. For example, Δw = 0 only occurs when N is an even number. This bottom edge width difference Δw of 0 specifically refers to the bottom edge width difference between the two middle tabs. For the bottom edge width difference between tabs when N is odd, the bottom edge width difference between non-middle tabs when N is even, and the bottom edge width difference between middle and non-middle tabs when N is even, Δw ranges from 0.1 mm to 4 mm; for example, the bottom edge width difference Δw is 0.1 mm, 0.5 mm, 1 mm, 1.5 mm, 2 mm, 2.5 mm, 3 mm, 3.5 mm, 4 mm, or the like. In this embodiment, Δw can be 2 mm, 3 mm, or 4 mm to ensure sufficient misalignment tolerance between adjacent tabs 2 and avoid wasting a large amount of material for tabs 2.

Referring to FIG. 3, for adjacent tabs 2 with a non-zero bottom edge width difference, the misalignment amount at each of the left and right sides of the narrower tab 2 is a misalignment margin Q, where Q = Δw/2. That is, the allowable misalignment at each of the left and right edges of the narrower tab 2 is Δw/2. When the centerlines of two adjacent tabs 2 coincide, the distance between the edge of the narrower tab 2 and the edge of the wider tab 2 is exactly Δw/2. The misalignment margin Q ranges from 0.05 mm to 2 mm. For example, the value of the misalignment margin Q may be 0.05 mm, 0.5 mm, 1 mm, 1.5 mm, and 2 mm, ensuring sufficient misalignment tolerance between adjacent tabs 2 and effectively offsetting misalignment of tabs 2 caused by the dimensional accuracy of the winding needle and the thickness accuracy of the electrode plate.

N tabs 2 are subsequently joined together using an ultrasonic soldering process. After the ultrasonic soldering head stamps, the ultrasonic solder mark is formed on each of the N tabs 2, so that the N tabs 2 are fixedly connected at the ultrasonic solder marks. The ultrasonic solder marks of the tabs 2 require a specific size range during design to ensure the stability and the current carrying capacity of the tabs 2 after the ultrasonic connection. In this embodiment, the dimension of the ultrasonic solder mark in the length direction of the electrode plate body 1 is L. The bottom edge width of the tab 2 with the narrowest bottom edge width is 0.8 mm to 2 mm larger than L. Specifically, the bottom edge width b of the middle tab in FIGS. 1 and 2 is 0.8 mm to 2 mm larger than the designed length L of the ultrasonic solder mark; for example, 0.8 mm, 1 mm, 1.2 mm, 1.4 mm, 1.6 mm, 1.8 mm, or 2 mm larger than L. This ensures that each tab 2 has a complete ultrasonic solder mark, ensuring the connection strength of the tabs 2 after ultrasonic soldering and the current carrying capacity of the tabs 2 after being assembled into the cell 200, thereby improving the performance of the battery product.

For example, the bottom edge width b of the middle tab is 1 mm larger than the designed length L of the ultrasonic solder mark. This ensures that each tab 2 has a complete ultrasonic solder mark while material usage is minimized.

In some embodiments, referring to FIGS. 1 and 2, the N tabs 2 have the same height so that the top edges of the N tabs 2, after winding, are as flush as possible.

In some embodiments, the height of the N tabs 2 may gradually increase in the length direction of the electrode plate body 1. After the electrode plate body 1 is wound, the top portions of the N tabs 2 can be cut off to ensure that the tops of the N overlapping tabs 2 are more flush.

In this embodiment, the center-to-center distance between adjacent tabs 2 gradually increases in the length direction of the electrode plate body 1, ensuring that the N tabs 2 overlap in the process of winding. One end of the electrode plate body 1 serves as the winding insertion end (which is fixed), and the other end serves as the winding end segment. In the direction from the winding insertion end to the winding end segment, the center-to-center distances between adjacent tabs 2 gradually increase to ensure that the N tabs 2 overlap after winding. That is, the end with a smaller center-to-center distance serves as the winding insertion end.

As shown in FIGS. 1 and 2, the tab 2 is trapezoidal in shape, with its lower bottom edge connected to the electrode plate body 1. This strengthens the base of the tab 2 and prevents breakage of the tab 2 due to strain. For example, the tab 2 is an isosceles trapezoid, ensuring uniform strength at the base of both sides of the tab 2 and maintaining the quality of the tab 2 after winding and overlapping, thereby improving the current carrying capacity of the tab 2.

A cell 200 is further provided according to this embodiment and includes a housing and a jelly roll component 100 disposed within the housing. The jelly roll component 100 includes a first separator, a positive electrode plate, a second separator, and a negative electrode plate which are stacked in sequence. Both the positive electrode plate and the negative electrode plate are embodied as the electrode plate described above. For example, a third separator and a packaging film are stacked on the side of the negative electrode plate facing away from the second separator, and are wound together to form the jelly roll component 100. FIG. 3 is a sectional view of the jelly roll component 100. The multiple overlapping tabs 2 on the left side are formed by winding with the positive electrode plate, and the multiple overlapping tabs 2 on the right side are formed by winding with the negative electrode plate. This jelly roll component 100 eliminates misalignment of the tabs 2, ensuring that both the N tabs 2 of the positive electrode plate and the N tabs 2 of the negative electrode plate meet subsequent ultrasonic soldering requirements, thereby improving the performance of the cell 200.

The housing of the cell 200 includes a container and a cover plate. The cover plate is provided with positive and negative electrode terminals. N overlapping tabs 2 are soldered to the corresponding electrode terminals via adapters.

FIG. 6 is a schematic structural diagram of a battery module according to a possible embodiment of the present application. As shown in FIG. 6, a battery module is further provided according to this embodiment, which includes multiple cells 200 as described above. The battery module further includes a cells contact system (CCS) assembly 300 configured to collect voltage and temperature signals from the cells 200. The battery module with the cells 200 described above can be assembled smoothly and has excellent performance.

## Claims

1. An electrode plate, comprising:
an electrode plate body (1) having a length direction and a width direction which are perpendicular to each other; and
N tabs (2) arranged at intervals in the length direction of the electrode plate body (1), wherein bottom edge widths of the N tabs (2) decrease and then increase sequentially in the length direction of the electrode plate body (1), and the N tabs (2) overlap after the electrode plate body (1) is wound;
wherein N is a positive integer greater than or equal to 3.

2. The electrode plate according to claim 1, wherein the N tabs (2) comprise a middle tab and two end tabs located at two ends respectively;
in response to N being an odd number, an ((N+1)/2)^{th} tab (2) is the middle tab;
in response to N being an even number, an (N/2)^{th} tab (2) and an ((N/2)+1)^{th} tab (2) are middle tabs; and
among the N tabs (2), a bottom edge width of the middle tab is the smallest, and bottom edge widths of the two end tabs are consistent.

3. The electrode plate according to claim 2, wherein each of the bottom edge widths of the two end tabs is a, and the bottom edge width of the middle tab is b, wherein b < a;
in response to N being the odd number, a bottom edge width difference Δw between two adjacent tabs (2) of the N tabs (2) is equal to 2(a - b)/(N - 1);
in response to N being the even number, a bottom edge width difference Δw between the two middle tabs (2) is equal to 0, and each of a bottom edge width difference Δw between non-middle tabs and a bottom edge width difference Δw between a non-middle tab and a middle tab is equal to 2(a - b)/(N - 2); wherein the non-middle tab is a tab other than the middle tabs among the N tabs (2).

4. The electrode plate according to claim 3, wherein each of the bottom edge widths of the two end tabs and the bottom edge width of the middle tab satisfy: b ≥ a/2.

5. The electrode plate according to claim 1, wherein a bottom edge width difference Δw between two adjacent tabs (2) of the N tabs (2) is in a range of 0 mm to 4 mm.

6. The electrode plate according to any one of claims 1 to 5, wherein each of the N tabs (2) is provided with an ultrasonic solder mark, the N tabs (2) are each fixedly connected at the ultrasonic solder mark, a dimension of the ultrasonic solder mark in the length direction of the electrode plate body (1) is L, and a bottom edge width of a tab (2) with a smallest bottom edge width among the N tabs (2) is 0.8 mm to 2 mm larger than L.

7. The electrode plate according to any one of claims 1 to 5, wherein heights of the N tabs (2) are uniform; or
heights of the N tabs (2) gradually increase in the length direction of the electrode plate body (1).

8. The electrode plate according to any one of claims 1 to 5, wherein center-to-center distances between two adjacent tabs (2) of the N tabs (2) gradually increase in the length direction of the electrode plate body (1).

9. The electrode plate according to any one of claims 1 to 5, wherein the N tabs (2) are trapezoidal, and lower bottom edges of the N tabs (2) are connected to the electrode plate body (1), and the bottom edge widths are widths of the lower bottom edges of the N tabs.

10. A cell, comprising a housing and a jelly roll component (100) disposed within the housing, wherein the jelly roll component (100) comprises a first separator, a positive electrode plate, a second separator, and a negative electrode plate which are stacked in sequence, and the positive electrode plate and the negative electrode plate are each the electrode plate according to any one of claims 1 to 9.

11. A battery module, comprising a cells contact system, CCS, assembly and a plurality of cells according to claim 10, wherein the CCS assembly is configured to collect voltage signals and temperature signals of the plurality of cells.
